# EUROPÄISCHE PATENTSCHRIFT

(11) **EP 4 242 115 B1**
(45) Veröffentlichungstag und Bekanntmachung des Hinweises auf die Patenterteilung: **04.12.2024**
(21) Anmeldenummer: 22161287.2
(22) Anmeldetag: 10.03.2022
(51) Int. Cl.: B64G 1/64

(54) **AUSWURFEINHEIT**
EJECTION UNIT
UNITÉ D'ÉJECTION

(43) Veröffentlichungstag der Anmeldung: 13.09.2023
(73) Patentinhaber: EXOLAUNCH GmbH, 10553 Berlin (DE)
(72) Erfinder: BOGDANOV, Dimitriy, 10785 Berlin (DE); SCHWARZ, Peter, 5023 Salzburg (AT); GRUBER, Johannes, 5020 Salzburg (AT); WIMMER, Peter, 5452 Pfarrwerfen (AT); POLYAK, Sergey, 10405 Berlin (DE); BEDEROV, Denis, 10789 Berlin (DE)
(74) Vertreter: Manitz Finsterwald Patent- und Rechtsanwaltspartnerschaft mbB

(56) Entgegenhaltungen:
- CN-A- 106 081 170
- CN-A- 109 229 433
- KR-B1- 102 134 620
- US-A1- 2014 319 283
- US-A1- 2016 031 572
- US-B1- 9 434 486

## Beschreibung

Die vorliegende Erfindung betrifft eine Auswurfeinheit nach dem Oberbegriff des Anspruchs 1 für zumindest einen quaderförmigen Satelliten, insbesondere für zumindest einen Picosatelliten, umfassend ein von zumindest einer Tür verschlossenes Gehäuse, in dem eine Führung zur Aufnahme eines Satelliten vorgesehen ist. Die Führung weist vier parallele Winkelschienen auf, deren zwei Schenkel jeweils an zwei (angrenzenden) Flächen eines (imaginären) Quaders angeordnet sind, wobei eine Klemmvorrichtung vorgesehen ist, die einen Satelliten in der Führung lösbar klemmt.

Eine derartige Auswurfeinheit ist aus der DE 10 2016 108 606 A1 oder aus der KR 102 134 620 B1 bekannt. Der imaginäre Quader, der von den Winkelschienen eingegrenzt wird, entspricht bei der DE 10 2016 108 606 A1 in seinen Außenabmessungen den Außenabmessungen des Satelliten, sodass dieser zwischen den Winkelschienen eingeschoben werden kann. Bei den Satelliten kann es sich um Satelliten nach dem CubeSat-Standard handeln. Diese werden üblicherweise durch eine Rakete in einen Orbit transportiert und dort durch die Auswurfeinheit ausgeworfen. Zum Auswerfen wird die Tür der Auswurfeinheit geöffnet und der oder die Satelliten werden aus der Führung herausgeschoben und dadurch ausgesetzt. Allerdings werden der Satellit und die Auswurfeinheit während des Transports in den Orbit großen Beschleunigungen und Belastungen ausgesetzt, insbesondere beim Start der Rakete und beim Absprengen von Raketenteilen, wie zum Beispiel einem größeren Hauptsatelliten.

Aus der CN 109 229 433 A ist eine Fixiervorrichtung für Picosatelliten bekannt, die mit Hilfe eines Roboterarms ausgesetzt werden. Die Fixiervorrichtung weist zwei feste und zwei verschwenkbare Halteelemente auf, wobei letztere beim Aussetzen des Satelliten von einer Feder gelöst werden. Aus der CN 106 081 170 A, der US 943 448 6 B1 und der US 2014/319283 A1 sind weitere Auswurfeinheiten für quaderförmige Satelliten bekannt.

Es ist deshalb die Aufgabe der vorliegenden Erfindung, eine Auswurfeinheit nach dem Oberbegriff des Anspruchs 1 derart weiterzubilden, dass bei vereinfachter Bauweise eine sichere und erschütterungsfreie Fixierung eines Satelliten in der Auswurfeinheit gewährleistet ist.

Die Lösung dieser Aufgabe erfolgt durch die Merkmale des Anspruchs 1 und insbesondere dadurch, dass die Klemmvorrichtung zumindest einen Spannmechanismus aufweist, der eine Winkelschiene ausschließlich mit Kraft in einer Richtung beaufschlagt, die eine Winkelhalbierende dieser Winkelschiene bildet.

Erfindungsgemäß wird ein Satellit nicht an einzelnen diskreten Stellen, sondern über eine Winkelschiene geklemmt, die Bestandteil der Führung ist, sodass die Klemmkraft, mit welcher der Satellit beaufschlagt wird, gleichmäßig über den Satelliten verteilt ist. Weiterhin erfolgt die Krafteinleitung der Klemmkraft nicht von zwei benachbarten Seiten auf den Satelliten, sondern diagonal, wodurch bei Beachtung der zur Verfügung stehenden Bauraumgegebenheiten und Bauteildimensionen mit nur einem Spannmechanismus außerordentlich hohe Klemm- und Dämpfungskräfte erzielt werden können. Hierdurch ist auch die Bauweise deutlich vereinfacht.

Vorteilhafte Ausführungsformen der Erfindung sind in der Beschreibung, der Zeichnung sowie den Unteransprüchen beschrieben.

Nach einer ersten vorteilhaften Ausführungsform kann eine der Winkelschienen einen Schenkel aufweisen, der von der benachbarten Fläche des (imaginären) Quaders nach außen beabstandet ist. Bei dieser Ausführungsform liegt somit eine der Winkelschienen nur mit einem Schenkel an einem Satelliten an, wobei der andere Schenkel der Winkelschiene von der benachbarten Seitenwand des Satelliten beabstandet ist. Hierdurch wird erreicht, dass mit der zugehörigen Klemmvorrichtung, die eine Kraft in diagonaler Richtung ausübt, eine Klemmkraft nur senkrecht auf eine Fläche des Satelliten übertragen wird. Durch Verwendung von zwei Spannmechanismen der vorstehend beschriebenen Art, d. h. mit einer Krafteinleitung einerseits diagonal und andererseits senkrecht zum Satelliten können auch größere Satelliten (beispielsweise der Größe 6U) zuverlässig gehalten und gedämpft werden, ohne dass die Kräfte der Spannmechanismen gegeneinander arbeiten.

Wenn nur ein Spannmechanismus an einer Winkelschiene vorgesehen ist, kann es vorteilhaft sein, wenn die drei übrigen Winkelschienen ortsfest an dem Gehäuse befestigt sind. Sofern zwei Winkelschienen mit Spannmechanismen versehen sind, kann es vorteilhaft sein, wenn die beiden anderen Winkelschienen ortsfest an dem Gehäuse befestigt sind.

Nach einer weiteren vorteilhaften Ausführungsform kann der zumindest eine Spannmechanismus einen auf Rollen gelagerten Schlitten aufweisen, der eine verschiebbare Kulissenleiste lagert, die wiederum auf Rollen des Schlittens gelagert ist. Durch eine derartige Konstruktion, die auf vorteilhafte Weise eine schräge Kulissenführung aufweisen kann, lassen sich die Kräfte zum Klemmen des Satelliten einerseits umlenken und andererseits vervielfachen, um eine verbesserte Dämpfung zu bewirken. Der Schlitten besitzt dabei zwei Rollensysteme, nämlich ein Rollensystem zum reibungsarmen Bewegen des Schlittens und ein zweites Rollensystem zum Bewegen der verschiebbaren Kulissenleiste.

Nach einer weiteren vorteilhaften Ausführungsform kann ein federbelasteter Konusbolzen vorgesehen sein, der in einer Sperrstellung einen Auswurfschlitten der Auswurfeinheit sichert, wenn sich der Auswurfschlitten in einer vorgespannten Position befindet. Durch einen an seinem vorderen Ende als Konus ausgebildeten federbelasteten Bolzen kann dieser bei Spannen des Auswurfschlittens von selbst in eine Sperrstellung gleiten, indem der Konus des Bolzens in eine Öffnung des Auswurfschlittens eingreift. Um zu verhindern, dass der Konusbolzen durch den vorgespannten Auswurfschlitten wieder aus seiner Sperrstellung herausgedrückt wird, kann nach einer weiteren vorteilhaften Ausführungsform ein Riegelzapfen vorgesehen sein, der den Konusbolzen in seiner Sperrstellung hält, solange die Tür nicht nahezu vollständig geöffnet ist. Hierdurch wird erreicht, dass erst bei vollständigem oder nahezu vollständigem Öffnen der Tür der Riegelzapfen hinter dem Konusbolzen gelöst wird, sodass sich der Konusbolzen aus seiner Sperrstellung herausbewegt und den Auswurfschlitten freigibt, sodass dieser durch die Kraft einer Feder in Auswurfrichtung bewegt werden kann, um einen Satelliten auszuwerfen.

Nach einer weiteren vorteilhaften Ausführungsform kann der zumindest eine Spannmechanismus einen an der Tür anschlagenden Druckstößel und darüber hinaus einen von der Tür betätigbaren Zugstößel aufweisen, der beispielsweise über einen Druckstab mit Kraft beaufschlagt wird, welcher mit der Tür gelenkig verbunden ist. Auf diese Weise wird der Spannmechanismus durch zwei voneinander unabhängig arbeitende Mechanismen gespannt. Bei sich schließender Tür drückt diese auf den Druckstößel, um den Spannmechanismus zu aktivieren. Gleichzeitig kann der Zugstößel eine Zugkraft auf den Spannmechanismus aufbringen, wenn die Tür geschlossen wird.

Bei der vorstehend beschriebenen Ausführungsform kann es vorteilhaft sein, wenn der Riegelzapfen am Ende der Öffnungsbewegung der Tür als Mitnehmer für den Zugstößel dient, da hierdurch ein redundanter Mechanismus geschaffen ist, um den Schlitten in Öffnungsrichtung zu bewegen.

Nach einer weiteren vorteilhaften Ausführungsform kann die Auswurfeinheit zumindest einen starren Schraubbolzen aufweisen, der einen Auswurfschlitten in einer vorgespannten Position an dem Gehäuse fixiert. Hierdurch kann das Laden des Satelliten vereinfacht und ein ungewolltes Vorschnellen des gespannten Auswurfschlittens verhindert werden. Der Schraubbolzen kann hierbei durch das Gehäuse von außen in den Auswurfschlitten eingeschraubt werden, wodurch gleichzeitig sichergestellt ist, dass sich der Schlitten an seinem hinteren Anschlag befindet, sodass ein Spiel zwischen dem Auswurfschlitten und dem Gehäuse eliminiert ist. Darüber hinaus dient ein solcher Schraubbolzen dazu, ungewollte Bewegungen und unnötige Systembelastungen vor dem Einsatz im All zu verhindern.

Nach einer weiteren vorteilhaften Ausführungsform kann in die Tür von außen zumindest ein Fixierstift eingeschraubt sein, der einen in der Führung angeordneten Satelliten in Auswurfrichtung spielfrei fixiert. Wenn ein Satellit in die Führung der Auswurfeinheit eingeführt und die Tür geschlossen worden ist, kann der Auswurfschlitten in seiner vorgespannten Position wie vorstehend beschrieben an dem Gehäuse fixiert werden. Wenn anschließend der Fixierstift von der Vorderseite der Tür eingeschraubt wird, kann jegliches Spiel zwischen dem Satelliten und dem Gehäuse eliminiert werden. Hierbei kann nach einer weiteren vorteilhaften Ausführungsform für den Fixierstift eine plättchenartige Verdrehsicherung vorgesehen sein, durch die einerseits der Fixierstift hindurchgeschraubt wird und die andererseits an der Außenseite der Tür mit einer Schraube gesichert ist. Bei gelöster Schraube kann sich die Verdrehsicherung noch leicht bewegen, sodass der Fixierstift in die Tür eingeschraubt werden kann. Wenn allerdings anschließend die Schraube festgezogen wird, verkippt die Verdrehsicherung leicht, sodass ein Lösen des Fixierstiftes aufgrund von Reibschluss in einem Gewindegang des Fixierstiftes nicht mehr möglich ist.

Nach einer weiteren vorteilhaften Ausführungsform kann an der Außenseite der Tür eine Notentriegelung vorgesehen sein, um die Tür bei Test- oder Servicearbeiten manuell und/oder stromlos zu öffnen.

Nach einer weiteren vorteilhaften Ausführungsform kann an der Außenseite der Tür eine werkzeuglos bedienbare Türverriegelung vorgesehen sein, um die Tür zu verriegeln. Hierbei kann es vorteilhaft sein, wenn die Türverriegelung mit nur einer Hand bedienbar ist.

Nach einer weiteren vorteilhaften Ausführungsform kann das Gehäuse mit Servicefenstern versehen sein, die jeweils mit einer Platte verschlossen sind, die auf einer Seite in eine Haltenut eingeführt ist, und die auf einer anderen Seite mit einem Klemmelement lösbar fixiert ist, das unverlierbar an dem Gehäuse befestigt ist. Auf diese Weise ist ein schnelles Lösen und Befestigen der Platte möglich, da diese lediglich in ihre Haltenut eingesteckt und mit dem Klemmelement am Gehäuse fixiert werden muss. Bei dem Klemmelement kann es sich beispielsweise um eine auf einen Gewindestift aufschraubbare Mutter handeln, wobei der Gewindestift an seinem äußeren Ende mit einem Endstück versehen sein kann, das ein vollständiges Lösen der Mutter verhindert.

Nachfolgend wird die vorliegende Erfindung rein beispielhaft anhand von vorteilhaften Ausführungsformen und unter Bezugnahme auf die beigefügten Zeichnungen beschrieben. Es zeigen:
- Fig. 1: eine perspektivische Ansicht einer Auswurfeinheit;
- Fig. 2: einen Längsschnitt entlang der Linie II-II von Fig. 1 bei geöffneten Türen;
- Fig. 3: einen Längsschnitt entsprechend Fig. 2 bei geschlossenen Türen;
- Fig. 4: eine vergrößerte Darstellung des rechten unteren Bereichs von Fig. 3;
- Fig. 5: eine Draufsicht auf den rechten unteren Auswurfschacht von Fig. 1 bei geöffneter Tür;
- Fig. 6: eine Draufsicht auf eine Auswurfeinheit nach einer weiteren Ausführungsform bei geöffneten Türen; und
- Fig. 7: eine vergrößerte Darstellung des rechten unteren Bereichs von Fig. 6.

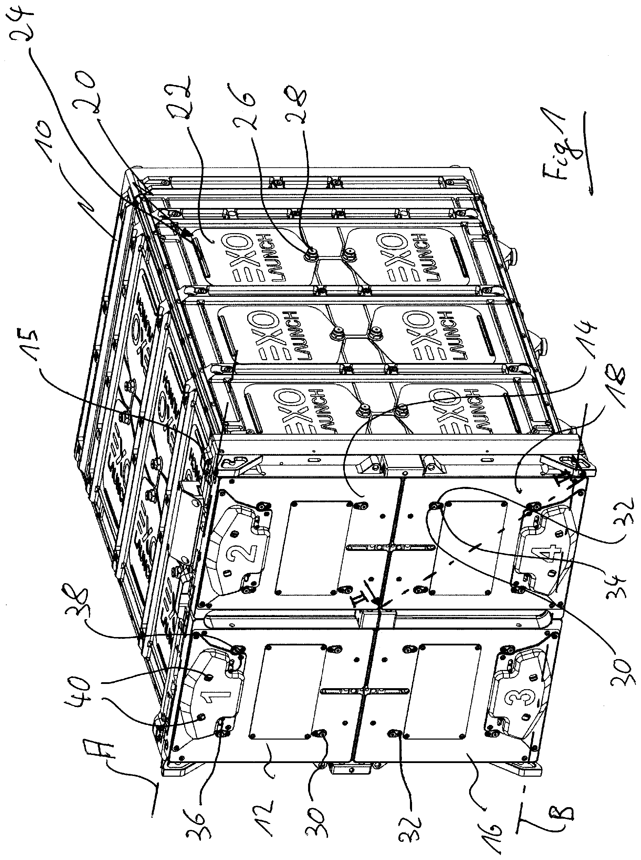

Fig. 1 zeigt eine perspektivische Ansicht einer beispielhaften Ausführungsform einer Auswurfeinheit für insgesamt vier quaderförmige Satelliten. Die Auswurfeinheit umfasst ein ebenfalls quaderförmiges Gehäuse 10, in dem insgesamt vier Auswurfschächte für jeweils einen Satelliten vorgesehen sind, die mit den Nummern 1 bis 4 gekennzeichnet sind. Jeder Auswurfschacht ist von einer Tür 12, 14, 16 und 18 verschlossen, wobei die Türen 12 und 14 um eine Achse A und die Türen 16 und 18 um eine Achse B verschwenkbar sind, um einen Auswurf eines Satelliten zu ermöglichen. Jede Tür ist durch eine nicht näher gezeigte Verriegelungseinheit verschlossen, die durch Fernsteuerung entriegelt werden kann.

Wie Fig. 1 ferner verdeutlicht, ist das Gehäuse mit mehreren Servicefenstern 20 versehen, die jeweils mit einer Platte 22 verschlossen sind. Jede Platte ist auf einer Seite in eine an dem Gehäuse ausgebildete Haltenut 24 eingeführt und auf ihrer gegenüberliegenden Seite mit einem Klemmelement 26 lösbar fixiert, das unverlierbar an dem Gehäuse 10 befestigt ist. Bei dem dargestellten Ausführungsbeispiel handelt es sich bei dem Klemmelement um eine Mutter, die auf einen Gewindestift aufgeschraubt ist, der an seiner Oberseite mit einer Kappe 28 versehen ist, um ein Lösen der Mutter zu verhindern. Jede Platte 22 ist flexibel ausgebildet und weist im Bereich des Klemmelementes eine einseitig nach außen hin offene Aussparung auf, sodass jede Platte 22 nach dem Einführen in die Haltenut 24 unter die Mutter 26 gesteckt und anschließend verschraubt werden kann.

In Fig. 1 ist weiterhin erkennbar, dass in jede Tür von außen zwei Fixierstifte 30 eingeschraubt sind, welche die Tür durchdringen und dazu dienen, einen Satelliten in Auswurfrichtung spielfrei zu fixieren. Hierbei ist jeder Fixierstift 30 durch eine Verdrehsicherung hindurchgeschraubt, die die Form eines Plättchens 32 aufweist, wobei das Plättchen 32 an der Außenseite der Tür mit einer Schraube 34 festgeschraubt werden kann. Bei gelöster Schraube 34 kann der Fixierstift 30 durch das Plättchen 32 hindurch in die Tür eingeschraubt werden. Wenn dann die Schraube 34 festgezogen wird, verkippt das Plättchen 32 innerhalb des Gewindes des Fixierstiftes 30, wodurch ein Herausdrehen des Fixierstiftes aus der Tür verhindert wird.

Fig. 1 zeigt weiter, dass an der Außenseite jeder Tür eine Türverriegelung vorgesehen ist, die durch zwei Stifte 36 und 38 gebildet ist, die werkzeuglos mithilfe von Daumen und Zeigefinger zusammengedrückt werden können, um jede einzelne Tür zu verriegeln. Auch ist an der Außenseite jeder Tür eine Notentriegelung 40 vorgesehen, die mithilfe eines Werkzeugs auslösbar ist.

An der Vorderseite des Gehäuses 10 ist an jeder Tür ein Kontaktelement 15 vorgesehen, dessen zwei Kontaktstifte bei vollständig geöffneter Tür kurzgeschlossen werden. Hierdurch lässt sich bei Abwerfen des Satelliten überprüfen, ob sich die Tür vollständig geöffnet hat. Ebenso sind an dem Gehäuse 10 Magnetschalter angebracht, die ein vollständiges Schließen jeder Tür detektieren können.

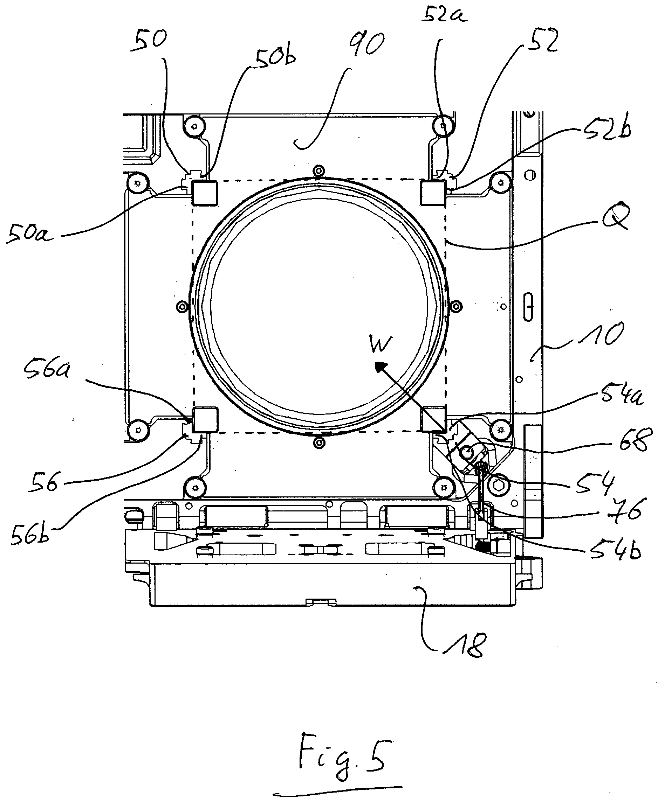

Fig. 5 zeigt eine Draufsicht auf einen Teil der Auswurfeinheit von Fig. 1, nämlich auf den Auswurfschacht 4 bei geöffneter Tür 18. Wie zu erkennen ist, ist in dem Gehäuse 10 zur Aufnahme jedes Satelliten eine vierseitige Führung des Satelliten vorgesehen, die aus insgesamt vier Winkelschienen 50, 52, 54 und 56 besteht, die parallel zueinander angeordnet sind, wobei jeweils zwei Schenkel 50a, 50b, 52a, 52b, 54a, 54b und 56a, 56b an zwei benachbarten Flächen eines (imaginären) Quaders Q angeordnet sind, der in Fig. 5 gestrichelt dargestellt ist. Dieser imaginäre Quader Q entspricht den Außenabmessungen eines auszuwerfenden Satelliten und erstreckt sich auch über die Länge des Satelliten in die Zeichenebene hinein. Somit wird ein in die durch die Winkelschienen 50 bis 56 gebildete Führung eingeschobener Satellit an jeder Außenseite von zwei Schenkeln der Führungsschienen geführt und gehalten.

Um den Satelliten in der Führung lösbar festzuklemmen, ist bei dem dargestellten Ausführungsbeispiel die Winkelschiene 54 mit einer nachfolgend noch näher beschriebenen Klemmvorrichtung versehen. Diese weist einen Spannmechanismus auf, der die Winkelschiene 54 ausschließlich mit Kraft in einer Richtung W beaufschlagt, die eine Winkelhalbierende dieser Winkelschiene bildet. Die Kraft wird also ausschließlich diagonal auf den Satelliten aufgebracht. Da die drei übrigen Winkelschienen 50, 52 und 56 ortsfest an dem Gehäuse 10 befestigt sind, kann durch Kraftbeaufschlagung der Winkelschiene 54 in Richtung der Winkelhalbierenden Wein Satellit sicher in dem Gehäuse 10 geklemmt und gehalten werden.

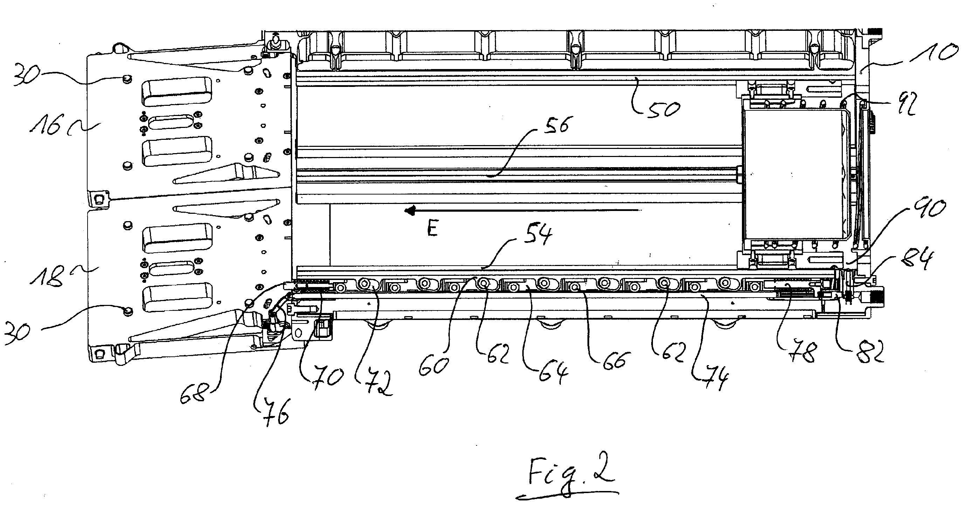

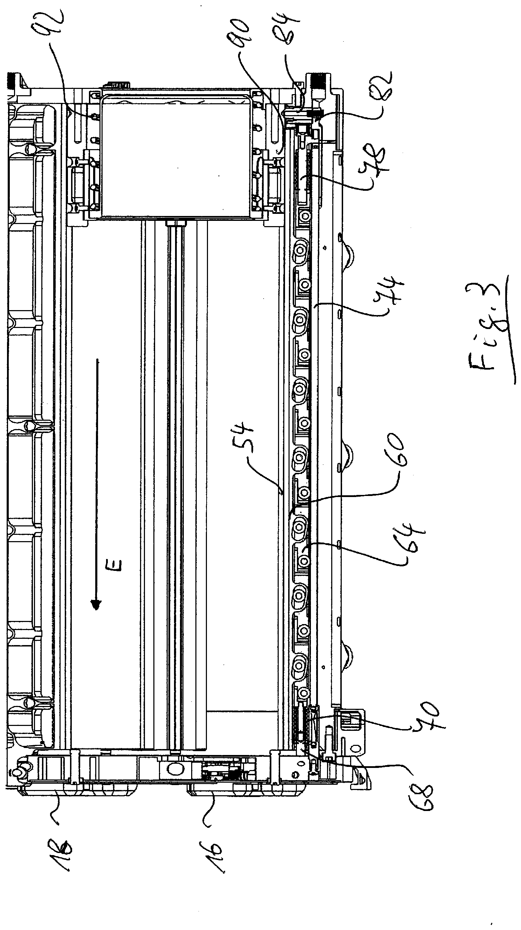

Fig. 2 und Fig. 3 zeigen einen Schnitt entlang der Linie II-II von Fig. 1 jeweils bei geöffneten (Fig. 2) und geschlossenen (Fig. 3) Türen. Wie dabei Fig. 2 verdeutlicht, ist die Winkelschiene 54 an einer verschiebbaren Kulissenleiste 60 befestigt, die auf Rollen 62 eines Schlittens 64 gelagert ist, der wiederum auf Rollen 66 gelagert ist und in Auswurfrichtung E bewegt werden kann. Zum Verschieben des Schlittens 64 entgegen der Auswurfrichtung E dient ein Druckstößel 68, der bei sich schließender Tür 18 an der Rückseite der Tür anschlägt und der den Schlitten 64 gegen die Kraft einer Feder 70 entgegen der Auswurfrichtung E verschiebt. Durch Verschieben des Schlittens 64 entgegen der Auswurfrichtung E bewegen sich die Rollen 62 innerhalb ihrer Kulissenführungen 72, die sich in Bezug auf die Auswurfrichtung E schräg erstrecken und bei dem dargestellten Ausführungsbeispiel eine Steigung von sechs zu eins aufweisen. Wird somit der Schlitten 64 um sechs Einheit bewegt, bewirkt dies eine Bewegung der Kulissenleiste 60 und damit auch des Winkelprofils 54 um eine Einheit. Umgekehrt wird eine Kraft, welche auf die Winkelschiene 54 (aufgrund von Erschütterungen des Satelliten) wirkt, um den Faktor sechs reduziert, wodurch auch schwere Erschütterungen gut gedämpft werden können.

Ein weiterer Bestandteil des Spannmechanismus für die Winkelschiene 54 ist ein Druckstab 74, der an seinem vorderen Ende über ein Gelenk 76 mit der Tür 18 verbunden ist, und der an seinem hinteren Ende mit einem Zugstößel 78 verbunden ist, der den Schlitten 64 gegen die Kraft einer Feder 80 entgegen der Auswurfrichtung E nach hinten zieht. Mit dem Zugstößel 78 verbunden ist ein Riegelzapfen 82, der hinter einen federbelasteten Konusbolzen 84 geschoben werden kann, welcher zum Sichern eines Auswurfschlittens 90 dient, wie nachfolgend näher beschrieben wird.

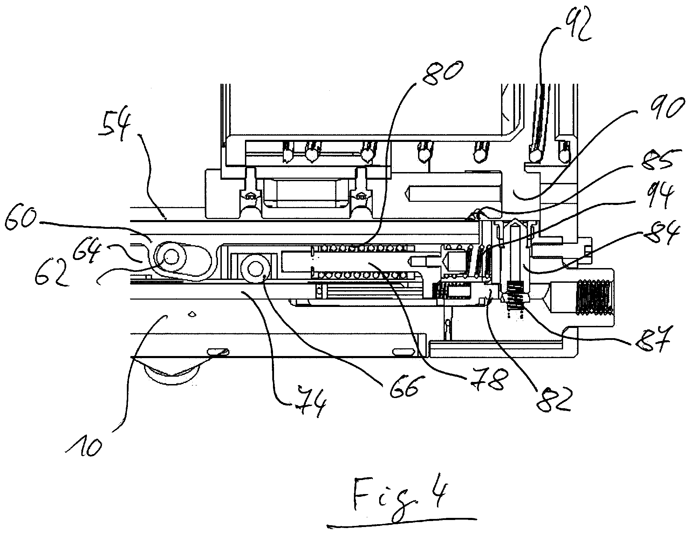

Wie Fig. 5 zeigt, läuft der Auswurfschlitten 90 auf allen vier Winkelschienen 50 bis 56, wobei durch eine Auswurffeder 92 ein Auswerfen des Satelliten bewirkt werden kann. Um den Auswurfschlitten 90 in seiner vorgespannten hinteren Position (Figuren 2 bis 4) zu halten, greift der an seiner Vorderseite mit einem Konus versehene Konusbolzen 84 in eine entsprechende Aussparung 85 in dem Auswurfschlitten 90 ein. In Fig. 4 ist hierbei eine Position des Auswurfschlittens 90 dargestellt, in der Letzterer noch nicht vollständig in seine hintere Endposition bewegt worden ist (vgl. auch Fig. 2). Wenn dies allerdings der Fall ist (Fig. 3), so sichert der Konusbolzen 84 den Auswurfschlitten 90 in der Sperrstellung des Konusbolzens 84, indem dieser von seiner Feder 87 in die Aussparung 85 des Auswurfschlittens 90 gedrückt wird. Durch die Konusform des Konusbolzens 84 kann der Auswurfschlitten 90 zunächst über den Konusbolzen 84 gleiten, bis dieser in die Aussparung 85 eingreift. Um ein Lösen des Konusbolzens 84 aus seiner Sperrstellung zu verhindern, wird der Konusbolzen 84 an seinem hinteren Ende von dem Riegelzapfen 82 blockiert, solange die Tür 18 nicht vollständig oder nicht nahezu vollständig geöffnet ist. Erst wenn die Tür 18 ihre Offenstellung erreicht hat, hat sich der Druckstab 74 weit genug in Auswurfrichtung E bewegt, um den Konusbolzen 84 an seiner Rückseite freizugeben. In diesem Moment bewirkt die Kraft der Auswurffeder 92 eine Bewegung des Auswurfschlittens 90 in Auswurfrichtung E, sodass ein auf den Winkelschienen befindlicher Satellit ausgeworfen werden kann. Bei dieser Bewegung dient auch der Riegelzapfen 82 als Mitnehmer für den Zugstößel 78, d. h. der Riegelzapfen 82 drückt von hinten auf den Zugstö-βel 78, sodass dieser zwangsgesteuert in Auswurfrichtung E bewegt wird, falls die Kraft einer Druckfeder 94 (Fig. 4) nicht ausreicht, den Schlitten 64 in Auswurfrichtung E zu bewegen.

Zum Laden eines Satelliten in einem Auswurfschacht der vorstehend beschriebenen Auswurfeinheit wird zunächst der Auswurfschlitten 90 entgegen der Auswurfrichtung E bis an das hintere Ende des Auswurfschachtes verschoben, sodass die Auswurffeder 92 komprimiert wird. In dieser Stellung kann der Auswurfschlitten dann mithilfe von gefederten Schraubbolzen zunächst in der vorgespannten Position an dem Gehäuse 10 fixiert werden, indem der Auswurfschlitten 90 über den gefederten Schraubbolzen hinweggleitet, bis dieser in eine Fixieröffnung eingreift. Hierdurch ist es im Folgenden nicht mehr erforderlich, den Auswurfschlitten 90 manuell in seiner vorgespannten Position zu halten.

Anschließend können von der Rückseite des Gehäuses 10 aus einer oder mehrere Schraubbolzen durch das Gehäuse in den Auswurfschlitten 90 eingeschraubt werden, um den Auswurfschlitten 90 in seiner hintersten Position zu fixieren, wodurch gleichzeitig eine Transportsicherung gegeben ist. Anschließend kann der Satellit in den Auswurfschacht eingeführt werden, wobei dieser mit seinen vier äu-βeren Kanten in jede Winkelschiene 50 bis 56 eingeschoben wird. Wenn anschließend die Tür 18 geschlossen wird, drückt diese mit ihrer Innenseite gegen den Druckstößel 68 und gegen die Kraft der Feder 70, wodurch der Schlitten 64 entgegen der Auswurfrichtung E nach hinten bewegt wird, was wiederum die Kulissenleiste 60 aufgrund der schrägen Kulissenführungen in Richtung W (Fig. 5) bewegt. Gleichzeitig wird der Druckstab 74 über das Gelenk 76 nach hinten geschoben, wodurch der Schlitten 64 gegen die Kraft der Feder 80 nach hinten gedrückt wird, bis der Riegelzapfen 82 den Konusbolzen 84 hintergreift. Hierdurch ist der Auswurfschlitten 90 verriegelt, sodass nach Entfernen der starren Schraubbolzen und der gefederten Schraubbolzen ein Auswerfen des Satelliten möglich ist. Der Satellit wird in diesem Zustand durch die Kraft der Federn 70 und 80 von der Winkelschiene 54 gegen die Winkelschienen 50, 52 und 56 gedrückt. Übt der Satellit nach dem Start der Rakete durch auftretende Beschleunigungen eine Kraft auf die Winkelschiene 54 und damit auch auf die Kulissenleiste 60 aus, wird diese Kraft über die 6:1 Steigung auf den Schlitten 64 umgelenkt, der sechsmal so viel Weg zurücklegt wie die Kulissenleiste 60. Die Bewegung des Schlittens 64 wird dabei durch die beiden Federn 70 und 80 gedämpft. Besitzen diese beispielsweise eine maximale Kraft von 200 N, so bedeutet dies, dass das Dämpfungssystem den Satelliten mit 2400 N dämpft.

Wenn der Satellit im Weltraum ausgeworfen werden soll, wird die Tür ferngesteuert entriegelt, sodass sich diese über nicht näher dargestellte Federn öffnet. Hierdurch wird der Druckstößel 68 wieder freigegeben und der Druckstab 74 beginnt sich mit Öffnung der Tür in Auswurfrichtung E nach vorne zu bewegen, wodurch auch der Zugstößel 78 in Auswurfrichtung E bewegt wird. Sobald die beiden Federn 70 und 80 auf den Schlitten 64 keine Kraft mehr ausüben, wird dieser durch die Druckfeder 94 in Auswurfrichtung E nach vorne gedrückt und durch diese Bewegung wird über die schrägen Kulissenführungen 72 ein Zurückziehen der Kulissenleiste 60 bewirkt, wodurch der Satellit nicht länger in seiner Führung geklemmt ist. In den letzten Öffnungswinkelgraden der Tür 18 wird der Riegelzapfen 82 zwangsgesteuert durch den Druckstab 74 hinter dem Konusbolzen 84 herausgezogen, sodass dieser von dem Auswurfschlitten 90 weggedrückt werden kann, wodurch der Auswurfschlitten 90 durch die Auswurffeder 92 in Auswurfrichtung E bewegt wird, sodass der Satellit ausgeworfen wird.

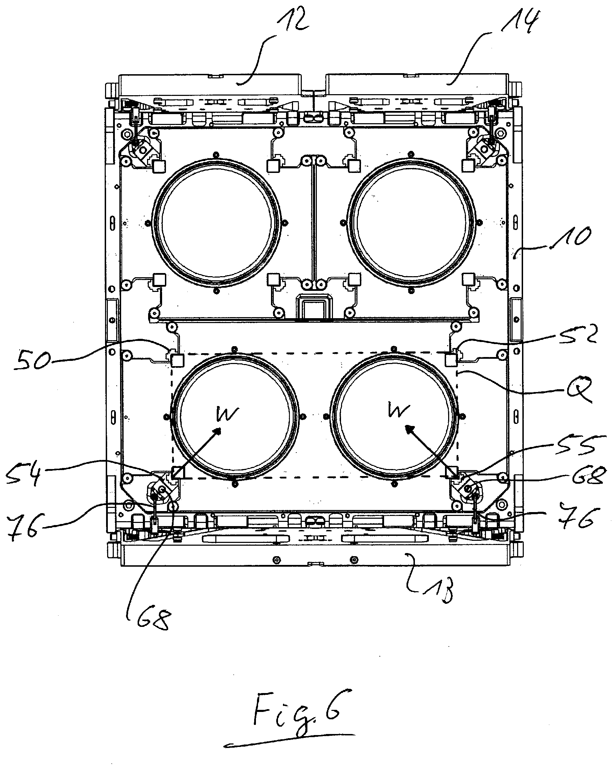

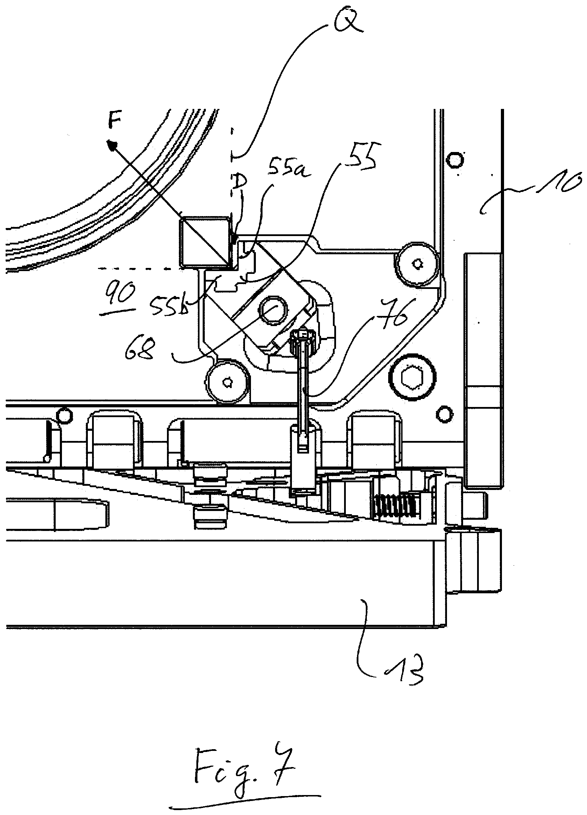

Fig. 6 und Fig. 7 zeigen eine weitere Ausführungsform einer Auswurfeinheit, wobei gleiche Komponenten mit gleichen Bezugszeichen versehen sind und nur die Unterschiede erläutert werden. Bei der in Fig. 6 dargestellten Auswurfeinheit sind insgesamt drei Auswurfschächte vorgesehen, die von Türen 12, 13 und 14 verschließbar sind, wobei der untere Auswurfschacht, der mit der Tür 13 verschlossen werden kann, das doppelte Volumen eines oberen Auswurfschachtes besitzt. Die beiden oberen Auswurfschächte mit den Türen 12 und 14 sind wie bei dem vorstehend beschriebenen Ausführungsbeispiel gestaltet. Der untere Auswurfschacht mit der Tür 13 besitzt wiederum zwei ortsfeste Winkelschienen 50 und 52 sowie eine Winkelschiene 54, die mit einem Spannmechanismus der vorstehend beschriebenen Art versehen ist. Die vierte Winkelschiene 55, die sich auf der gleichen unteren Seite des Quaders Q wie die Winkelschiene 54 befindet, ist ebenfalls mit einem Spannmechanismus der vorstehend beschriebenen Art versehen. Allerdings unterscheidet sich die Ausbildung der Winkelschiene 55 von derjenigen der Winkelschiene 54, was unter Bezugnahme auf Fig. 7 näher erläutert wird.

Wie Fig. 7 zeigt, weist auch die Winkelschiene 55 zwei rechtwinklig zueinander verlaufende Schenkel 55a und 55b auf, wobei der (in der Figur horizontale) Schenkel 55b wiederum an der unteren Fläche des Quaders Q angeordnet ist. Allerdings ist der andere (in der Figur vertikale) Schenkel 55a der Winkelschiene 55 von seiner benachbarten Fläche des Quaders Q um einen Abstand D nach außen beabstandet. Hierdurch liegt die Winkelschiene 55 mit ihrem Schenkel 55a nicht an einem Satelliten an, der den Raum des Quaders Q ausfüllt. Der Spannmechanismus der Winkelschiene 55 übt somit eine Kraft F aus, die parallel zur Winkelhalbierenden der Winkelschiene 55 verläuft. Allerdings wirkt diese Kraft F nur in vertikaler Richtung auf einen in den Auswurfschacht eingeführten Satelliten, da der Schenkel 55a von dem Quader Q um den Abstand D beabstandet ist und somit auch den Satelliten nicht berührt. Auf diese Weise wird erreicht, dass ein Satellit in dem Auswurfschacht aufgrund der beiden Spannmechansismen an den Winkelschienen 54 und 55 stark gedämpft und gut gehalten werden kann, ohne dass jedoch die beiden Spannmechanismen gegeneinander arbeiten.

## Patentansprüche

1. Auswurfeinheit für zumindest einen quaderförmigen Satelliten, umfassend ein von zumindest einer Tür (12-18) verschlossenes Gehäuse (10), in dem eine Führung zur Aufnahme eines Satelliten vorgesehen ist, die vier parallele Winkelschienen (50-56) umfasst, deren zwei Schenkel (52a-54b, 55b, 56a, 56b) jeweils an zwei Flächen eines Quaders (Q) angeordnet sind, und eine Klemmvorrichtung, die einen Satelliten in der Führung lösbar klemmt, wobei
die Klemmvorrichtung zumindest einen Spannmechanismus aufweist, der eine der Winkelschienen (54) ausschließlich mit Kraft in einer Richtung (W) beaufschlagt, die eine Winkelhalbierende dieser Winkelschiene (54) bildet.

2. Auswurfeinheit nach Anspruch 1,
wobei eine der Winkelschienen (55) einen Schenkel (55a) aufweist, der von der benachbarten Fläche des Quaders (Q) um einen Abstand (D) nach au-βen beabstandet ist.

3. Auswurfeinheit nach Anspruch 1 oder 2,
wobei zwei oder drei der Winkelschienen ortsfest an dem Gehäuse (10) befestigt sind.

4. Auswurfeinheit nach einem der vorstehenden Ansprüche,
wobei der zumindest eine Spannmechanismus einen auf Rollen (62) gelagerten Schlitten (64) aufweist, der eine verschiebbare Kulissenleiste (60) lagert, die auf Rollen (66) des Schlittens (64) gelagert ist.

5. Auswurfeinheit nach einem der vorstehenden Ansprüche,
wobei ein federbelasteter Konusbolzen (84) vorgesehen ist, der in einer Sperrstellung einen Auswurfschlitten (90) sichert, wenn sich dieser in einer vorgespannten Position befindet.

6. Auswurfeinheit nach Anspruch 5,
wobei der Konusbolzen (84) von einem Riegelzapfen (82) in seiner Sperrstellung gehalten ist, solange die Tür (12-18) nicht nahezu vollständig geöffnet ist.

7. Auswurfeinheit nach einem der vorstehenden Ansprüche,
wobei der zumindest eine Spannmechanismus einen an der Tür (12-18) anschlagenden Druckstößel (68) und einen von der Tür (12-18) betätigbaren Zugstößel (78) aufweisen, der beispielsweise über einen Druckstab (74) mit Kraft beaufschlagt wird, welcher mit der Tür (12-18) gelenkig verbunden ist.

8. Auswurfeinheit nach Anspruch 6 und 7,
wobei am Ende der Öffnungsbewegung der Tür (12-18) der Riegelzapfen (82) als Mitnehmer für den Zugstößel (78) dient.

9. Auswurfeinheit nach einem der vorstehenden Ansprüche,
wobei zumindest ein starrer Schraubbolzen vorgesehen ist, der einen Auswurfschlitten (90) in einer vorgespannten Position an dem Gehäuse (10) fixiert.

10. Auswurfeinheit nach einem der vorstehenden Ansprüche,
wobei zumindest ein gefederter Schraubbolzen vorgesehen ist, der einen Auswurfschlitten (90) in einer vorgespannten Position an dem Gehäuse (10) fixiert

11. Auswurfeinheit nach einem der vorstehenden Ansprüche,
wobei in die Tür (12-18) von außen zumindest ein Fixierstift (30) eingeschraubt ist, der einen in der Führung angeordneten Satelliten in Auswurfrichtung (E) spielfrei fixiert.

12. Auswurfeinheit nach Anspruch 11,
wobei dass der Fixierstift (30) durch eine plättchenartige Verdrehsicherung (32) geschraubt ist, die an der Außenseite der Tür (12-18) mit einer Schraube (34) gesichert ist.

13. Auswurfeinheit nach einem der vorstehenden Ansprüche,
wobei an der Außenseite der Tür (12-18) eine Notentriegelung vorgesehen ist.

14. Auswurfeinheit nach einem der vorstehenden Ansprüche,
wobei an der Außenseite der Tür (12-18) eine werkzeuglos bedienbare Türverriegelung (36, 38) vorgesehen ist.

15. Auswurfeinheit nach einem der vorstehenden Ansprüche,
wobei das Gehäuse (10) mit Servicefenstern (20) versehen ist, die mit einer Platte (22) verschlossen sind, die auf einer Seite in eine Haltenut (24) eingeführt ist, und die auf einer anderen Seite mit einem Klemmelement (26) lösbar fixiert ist, das unverlierbar an dem Gehäuse (10) befestigt ist.

## Claims

1. An ejection unit for at least one cuboid satellite, said ejection unit comprising a housing (10) which is closed by at least one door (12-18) and in which a guide for receiving a satellite is provided, said guide comprising four parallel angled rails (50-56) whose two legs (52a-54b, 55b, 56a, 56b) are each arranged at two surfaces of a cuboid (Q), and a clamping apparatus which releasably clamps a satellite in the guide,
wherein the clamping apparatus has at least one clamping mechanism which applies a force to one of the angled rails (54) exclusively in a direction (W) that forms a bisecting line of this angled rail (54).

2. An ejection unit according to claim 1,
wherein one of the angled rails (55) has a leg (55a) which is outwardly spaced apart from the adjacent surface of the cuboid (Q) by a spacing (D).

3. An ejection unit according to claim 1 or 2,
wherein two or three of the angled rails are fastened to the housing (10) in a stationary manner.

4. An ejection unit according to any one of the preceding claims,
wherein the at least one clamping mechanism has a carriage (64) supported on rollers (62), said carriage (64) supporting a displaceable slot rail (60) which is supported on rollers (66) of the carriage (64).

5. An ejection unit according to any one of the preceding claims,
wherein a spring-loaded conical bolt (84) is provided and secures an ejection carriage (90) in a blocking position when said ejection carriage (90) is in a preloaded position.

6. An ejection unit according to claim 5,
wherein the conical bolt (84) is held in its blocking position by a locking pin (82) as long as the door (12-18) is not almost fully open.

7. An ejection unit according to any one of the preceding claims,
wherein the at least one clamping mechanism has a push plunger (68) abutting the door (12-18) and a pull plunger (78) which can be actuated by the door (12-18) and which is acted on by force, for example, via a push rod (74) which is connected to the door (12-18) in an articulated manner.

8. An ejection unit according to claim 6 and 7,
wherein, at the end of the opening movement of the door (12-18), the locking pin (82) serves as an entrainer for the pull plunger (78).

9. An ejection unit according to any one of the preceding claims,
wherein at least one rigid screw bolt is provided that fixes an ejection carriage (90) in a preloaded position at the housing (10).

10. An ejection unit according to any one of the preceding claims,
wherein at least one spring-loaded screw bolt is provided that fixes an ejection carriage (90) in a preloaded position at the housing (10).

11. An ejection unit according to any one of the preceding claims,
wherein at least one fixing pin (30) is screwed into the door (12-18) from the outside and fixes a satellite without play in the ejection direction (E), said satellite being arranged in the guide.

12. An ejection unit according to claim 11,
wherein the fixing pin (30) is screwed through a plate-like security against rotation (32) which is secured at the outer side of the door (12-18) with a screw (34).

13. An ejection unit according to any one of the preceding claims,
wherein an emergency release device is provided at the outer side of the door (12-18).

14. An ejection unit according to any one of the preceding claims,
wherein a door locking device (36, 38) which can be operated without tools is provided at the outer side of the door (12-18).

15. An ejection unit according to any one of the preceding claims,
wherein the housing (10) is provided with service windows (20) which are closed with a plate (22) which is inserted at one side into a retaining groove (24) and which is releasably fixed at another side to a clamping element (26) which is captively fastened to the housing (10).

## Revendications

1. Ensemble d'éjection pour au moins un satellite parallélépipédique, comprenant un boîtier (10) fermé par au moins une porte (12-18), dans lequel est prévu un guidage de réception d'un satellite, qui comprend quatre cornières parallèles (50-56) dont les deux ailes (52a-54b, 55b, 56a, 56b) sont disposées respectivement sur deux faces d'un parallélépipède (Q), et un dispositif de serrage qui serre de manière amovible un satellite dans le guidage, dans lequel
le dispositif de serrage comporte au moins un mécanisme de précontrainte qui exerce une force sur l'une des cornières (54) exclusivement dans une direction (W) qui forme une bissectrice de cette cornière (54).

2. Ensemble d'éjection selon la revendication 1,
dans lequel
l'une des cornières (55) présente une aile (55a) qui est espacée de la face voisine du parallélépipède (Q) d'une certaine distance (D) vers l'extérieur.

3. Ensemble d'éjection selon la revendication 1 ou 2,
dans lequel
deux ou trois desdites cornières sont fixées de manière stationnaire au boîtier (10).

4. Ensemble d'éjection selon l'une des revendications précédentes,
dans lequel
ledit au moins un mécanisme de précontrainte comprend un chariot (64) monté sur des galets (62), qui supporte une barre de coulisse (60) mobile montée sur des galets (66) du chariot (64).

5. Ensemble d'éjection selon l'une des revendications précédentes,
dans lequel
il est prévu un boulon conique (84) sollicité par ressort, qui bloque un chariot d'éjection (90) dans une position de blocage lorsque celui-ci se trouve dans une position sous précontrainte.

6. Ensemble d'éjection selon la revendication 5,
dans lequel
le boulon conique (84) est maintenu dans sa position de blocage par un tourillon de verrouillage (82) tant que la porte (12-18) n'est pas presque entièrement ouverte.

7. Ensemble d'éjection selon l'une des revendications précédentes,
dans lequel
ledit au moins un mécanisme de précontrainte comporte un piston de pression (68) en butée contre la porte (12-18) et un piston de traction (78) actionnable par la porte (12-18), qui est soumis à une force par exemple par l'intermédiaire d'une tige de pression (74) reliée de manière articulée à la porte (12-18).

8. Ensemble d'éjection selon les revendications 6 et 7,
dans lequel
à la fin du mouvement d'ouverture de la porte (12-18), le tourillon de verrouillage (82) sert d'entraîneur pour le piston de traction (78).

9. Ensemble d'éjection selon l'une des revendications précédentes,
dans lequel
il est prévu au moins un boulon fileté rigide qui fixe un chariot d'éjection (90) au boîtier (10) dans une position sous précontrainte.

10. Ensemble d'éjection selon l'une des revendications précédentes,
dans lequel
il est prévu au moins un boulon fileté monté sur ressort qui fixe un chariot d'éjection (90) au boîtier (10) dans une position sous précontrainte.

11. Ensemble d'éjection selon l'une des revendications précédentes,
dans lequel
au moins une goupille de fixation (30) est vissée de l'extérieur dans la porte (12-18), laquelle fixe un satellite, disposé dans le guidage, sans jeu dans la direction d'éjection (E).

12. Ensemble d'éjection selon la revendication 11,
dans lequel
la goupille de fixation (30) est vissée à travers un dispositif anti-torsion (32) en forme de plaquette, qui est bloqué par une vis (34) sur la face extérieure de la porte (12-18).

13. Ensemble d'éjection selon l'une des revendications précédentes,
dans lequel
un déverrouillage d'urgence est prévu sur la face extérieure de la porte (12-18).

14. Ensemble d'éjection selon l'une des revendications précédentes,
dans lequel
un verrouillage de porte (36, 38) pouvant être actionné sans outil est prévu sur la face extérieure de la porte (12-18).

15. Ensemble d'éjection selon l'une des revendications précédentes,
dans lequel
le boîtier (10) est pourvu de fenêtres de service (20) fermées par une plaque (22) qui est insérée d'un côté dans une rainure de retenue (24) et qui est fixée de manière amovible de l'autre côté par un élément de serrage (26) fixé de manière imperdable au boîtier (10).
